# EUROPEAN PATENT APPLICATION

(11) **EP 4 593 530 A1**
(43) Date of publication of application: **30.07.2025**
(21) Application number: 24153598.8
(22) Date of filing: 24.01.2024
(51) Int. Cl.: H05B 45/37, H02J 1/10

(54) **POWER SUPPLY, AND LIGHTING SYSTEM COMPRISING THE SAME**

(71) Applicant: Tridonic GmbH & Co. KG, 6851 Dornbirn (AT)
(72) Inventor: Saccavini, Lukas, 6851 Dornbirn (AT); Stark, Stefan, 6851 Dornbirn (AT); Auer, Hans, 6851 Dornbirn (AT); Romano, Fabio, 6851 Dornbirn (AT); Schneider, Miguel Philipp, 6851 Dornbirn (AT)
(74) Representative: Rupp, Christian

(57) **Abstract**

Disclosed is a power supply (1), comprising a plurality of first-stage power converters (11) having parallel-connected output ports (111) and being configured to: regulate a common output voltage (112) of the first-stage power converters (11) in accordance with a constant voltage setpoint value; and balance average output powers of the first-stage power converters (11). This provides a more balanced distribution of output power supply across a plurality of parallel-connected constant voltage LED drivers.

## Description

### Technical Field

The present disclosure relates generally to the field of lighting technology, and in particular to a power supply and a lighting system comprising said power supply.

### Background Art

When parallel-connecting output ports of constant voltage LED drivers, the parallel connected drivers attempt to regulate the common output voltage.

One of the drivers may measure a slightly lower output voltage (due to tolerances in the measurement circuit) and increase its control value to approach the constant voltage setpoint value. Another one of the drivers may measure a slightly higher output voltage and reduce its control value. As a result, one driver approaches maximum power and the other minimum power. In summary, if the measured output voltages of the drivers are slightly different, eventually one of them will provide the output power alone.

### Summary

It is an object to overcome the above-mentioned and other drawbacks.

The foregoing and other objects are achieved by the features of the independent claims. Further implementation forms are apparent from the dependent claims, the description and the figures.

According to a first aspect, a power supply is provided, comprising a plurality of first-stage power converters having parallel-connected output ports and being configured to regulate a common output voltage of the first-stage power converters in accordance with a constant voltage setpoint value; and balance average output powers of the first-stage power converters.

For balancing the average output powers of the first-stage power converters, the respective first-stage power converter may be configured to detect the respective output power; calculate a respective time-averaged output power in dependence of the respective output power; and modify the respective output power in accordance with the respective time-averaged output power.

For modifying the respective output power in accordance with the respective time-averaged output power, the respective first-stage power converter may be configured to decrease the respective output power if the respective time-averaged output power exceeds a defined fraction of a defined total output power of the power supply by a defined threshold; and increase the respective output power if the respective time-averaged output power falls short of the defined fraction of the defined total output power of the power supply by the defined threshold.

The defined fraction of the defined total output power of the power supply may be inversely proportional to a cardinality N of the first-stage power converters.

The defined threshold may comprise 50%, preferably 10%, and more preferably 1% of the defined fraction of the defined total output power of the power supply.

For balancing the average output powers of the first-stage power converters, the respective first-stage power converter may be configured to periodically modulate a respective output power in accordance with a same sweep curve of the first-stage power converters and a relative phase shift among the first-stage power converters such that a total output power of the power supply consistently meets a defined total output power of the power supply.

The same sweep curve of the first-stage power converters may comprise one of a triangular sweep curve, and a sinusoidal sweep curve.

The relative phase shift among the first-stage power converters may be inversely proportional to a cardinality N of the first-stage power converters.

The power supply may further comprise a second-stage power converter, connected downstream of the parallel-connected output ports of the first-stage power converters and configured to regulate an output current in accordance with a constant current setpoint value.

The plurality of first-stage power converters may comprise a plurality of switching power supplies.

The second-stage power converter may comprise one of: a switching power supply, and a linear regulator.

According to a second aspect, a lighting system is provided, comprising a power supply according to the first aspect; and a light source connected downstream of the power supply.

The light source may comprise at least one light-emitting diode, LED.

### Advantageous Effects

The present disclosure provides a more balanced distribution of output power supply across a plurality of parallel-connected constant voltage LED drivers, improves a scalability with respect to power / load (there is no need to develop dedicated drivers for high power).

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a lighting system in accordance with the present disclosure;
- FIG. 2: illustrates a first mode of operation of the power supply of FIG. 1; and
- FIG. 3: illustrates a second mode of operation of the power supply of FIG. 1.

### Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

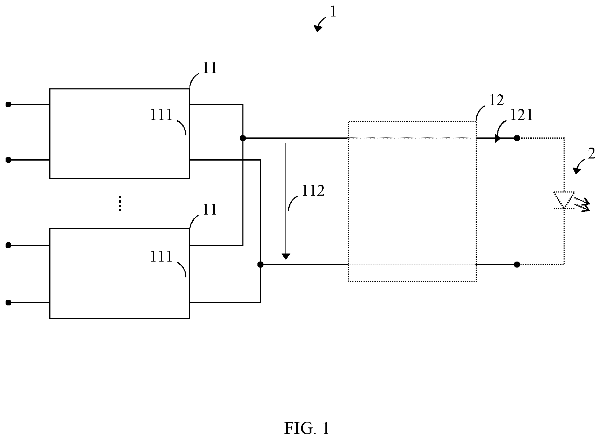

FIG. 1 illustrates a lighting system 1, 2 in accordance with the present disclosure.

The lighting system 1, 2 comprises a power supply 1 according to the first aspect and a light source 2 connected downstream of the power supply 1.

The light source 2 may comprise at least one light-emitting diode, LED.

The power supply 1 comprises a plurality of first-stage power converters 11 having parallel-connected output ports 111.

The plurality of first-stage power converters 11 may comprise a plurality of switching power supplies.

The power supply 1 may further comprise a second-stage power converter 12, connected downstream of the parallel-connected output ports 111 of the first-stage power converters 11.

The second-stage power converter 12 may be configured to regulate an output current 121 in accordance with a constant current setpoint value.

The second-stage power converter 12 may comprise one of: a switching power supply, and a linear regulator.

As previously mentioned, when combining the outputs of a plurality of constant voltage LED drivers, not all of the drivers will exactly regulate the output on exactly a same value, for example due to manufacturing tolerances. Thus, typically the constant voltage LED driver regulating on a highest nominal / setpoint value essentially provides all of the defined total output power.

The general idea to arrive at a more balanced distribution of output power supply across the parallel-connected plurality of constant voltage LED drivers is that the drivers do not communicate with each other and that there is no other centralized control for achieving a power balancing effect. Rather, each of the constant voltage LED drivers modifies at least one operation parameter autonomously, i.e. based on the detection of electric parameters at its output or internally, such that a more balanced output is achieved.

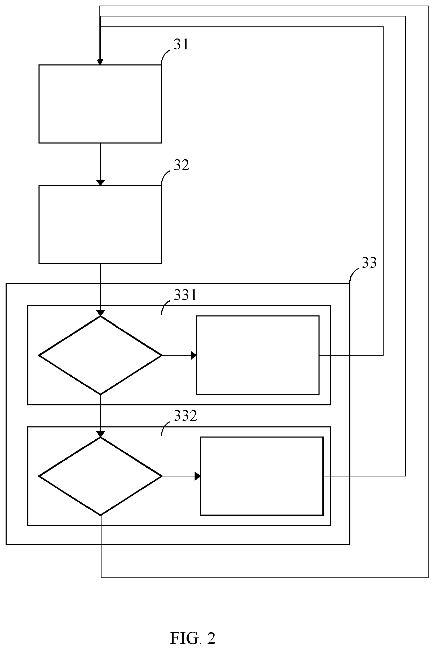

Two possible modes of operation are described next in connection with FIGs. 1 and 2, respectively.

FIG. 2 illustrates a first mode of operation of the power supply 1 of FIG. 1.

In this mode of operation, the power supply 1 is configured to regulate a common output voltage 112 of the first-stage power converters 11 in accordance with a constant voltage setpoint value, such as 48V, and to balance average output powers of the first-stage power converters 11.

Balancing as used herein may refer to seeking a quantitative equilibrium (i.e., equality).

For balancing the average output powers of the first-stage power converters 11 in the first mode of operation, the respective first-stage power converter 11 may be configured to detect 31 the respective output power; calculate 32 a respective time-averaged output power in dependence of the respective output power; and modify 33 the respective output power in accordance with the respective time-averaged output power.

For modifying the respective output power in accordance with the respective time-averaged output power, the respective first-stage power converter 11 may further be configured to decrease 331 the respective output power (this action being represented by the block of reference sign 331) if the respective time-averaged output power exceeds a defined fraction of a defined total output power of the power supply 1 by a defined threshold (this condition being represented by the diamond of reference sign 331); and may further be configured to increase 332 the respective output power (this action being represented by the block of reference sign 332) if the respective time-averaged output power falls short of the defined fraction of the defined total output power of the power supply 1 by the defined threshold (this condition being represented by the diamond of reference sign 332).

The defined fraction of the defined total output power of the power supply 1 may be inversely proportional to a cardinality N of the first-stage power converters 11. In other words, for a plurality of N=2 first-stage power converters 11, the defined fraction may comprise 1/N = 1/2 = 50% of the defined total output power of the power supply 1.

The defined threshold may comprise 50%, preferably 10%, and more preferably 1% of the defined fraction of the defined total output power of the power supply 1.

According to the first mode of operation, each first-stage power converter 11 monitors its output power supply and in case it is consistently higher than 1/2 (+ the defined threshold) of the defined total output power of the power supply 1, it may change at least one operation parameter with the effect that its output power supply is decreased. On the other hand, if its output power supply is consistently lower than 1/2 (+ the defined threshold) of the defined total output power of the power supply 1 over a certain time scale, it may change at least one operation parameter with the effect that its output power supply is increased.

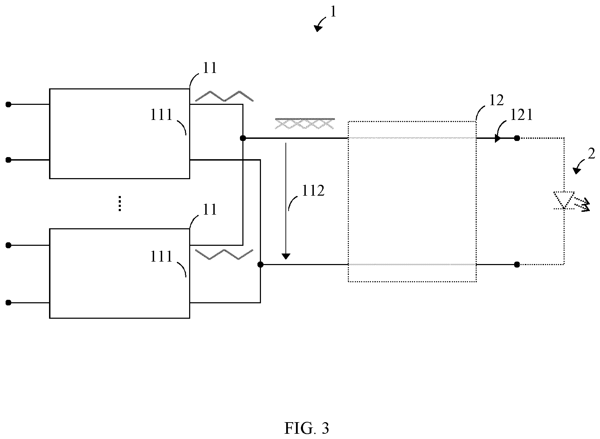

FIG. 3 illustrates a second mode of operation of the power supply 1 of FIG. 1.

Also in this mode of operation, the power supply 1 is configured to regulate a common output voltage 112 of the first-stage power converters 11 in accordance with a constant voltage setpoint value, and to balance average output powers of the first-stage power converters 11.

For balancing the average output powers of the first-stage power converters 11 in the second mode of operation, the respective first-stage power converter 11 may be configured to periodically modulate a respective output power in accordance with a same sweep curve of the first-stage power converters 11 and a relative phase shift among the first-stage power converters 11 such that a total output power of the power supply 1 consistently meets a defined total output power of the power supply 1.

In particular, the sweep curve of the first-stage power converters 11 may comprise one of: a triangular sweep curve (shown in FIG. 3 in connection with the parallel-connected output ports 111), and a sinusoidal sweep curve (not shown, but appreciated by those skilled in the art).

Correspondingly, the relative phase shift among the first-stage power converters 11 may be inversely proportional to a cardinality N of the first-stage power converters 11. For example, for a plurality of N=2 first-stage power converters 11, the relative phase shift may comprise 2π/N = 2π/2 π = 180°.

According to the second mode of operation, each first-stage power converter 11 modulates its output power such that in certain time periods the output power is much higher than 1/2 of the defined total output power of the power supply 1, for example up to 100%, while in other time periods, the output power is drastically less than 1/2 of the defined total output power of the power supply 1, for example even 0%. Thus, there will always be time periods in which one first-stage power converter 11 provides essentially all of the defined total output power of the power supply 1, but these are time-multiplexed time periods in which the same first-stage power converter 11 delivers drastically less than 1/2 of the defined total output power of the power supply 1.

The respective first-stage power converter 11 may be configured to monitor an output behavior of the other constant voltage LED drivers such that this modulation, for example in the form of a triangular output power sweep (see FIG. 3), is synchronized. In time periods where it is detected that the output power of another first-stage power converter 11 is increasing, thus another first-stage power converter 11 will correspondingly reduce its output power.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A power supply (1), comprising
a plurality of first-stage power converters (11) having parallel-connected output ports (111) and being configured to
regulate a common output voltage (112) of the first-stage power converters (11) in accordance with a constant voltage setpoint value; and
balance average output powers of the first-stage power converters (11).

2. The power supply (1) of claim 1,
wherein for balancing the average output powers of the first-stage power converters (11), the respective first-stage power converter (11) is configured to
detect (31) the respective output power;
calculate (32) a respective time-averaged output power in dependence of the respective output power; and
modify (33) the respective output power in accordance with the respective time-averaged output power.

3. The power supply (1) of claim 2,
wherein for modifying the respective output power in accordance with the respective time-averaged output power, the respective first-stage power converter (11) is configured to
decrease (331) the respective output power if the respective time-averaged output power exceeds a defined fraction of a defined total output power of the power supply (1) by a defined threshold; and
increase (332) the respective output power if the respective time-averaged output power falls short of the defined fraction of the defined total output power of the power supply (1) by the defined threshold.

4. The power supply (1) of claim 3,
the defined fraction of the defined total output power of the power supply (1) being inversely proportional to a cardinality N of the first-stage power converters (11).

5. The power supply (1) of claim 3 or claim 4,
the defined threshold comprising 50%, preferably 10%, and more preferably 1% of the defined fraction of the defined total output power of the power supply (1).

6. The power supply (1) of claim 1,
wherein for balancing the average output powers of the first-stage power converters (11), the respective first-stage power converter (11) is configured to
periodically modulate a respective output power in accordance with a same sweep curve of the first-stage power converters (11) and a relative phase shift among the first-stage power converters (11) such that a total output power of the power supply (1) consistently meets a defined total output power of the power supply (1).

7. The power supply (1) of claim 6,
the same sweep curve of the first-stage power converters (11) comprising one of
a triangular sweep curve, and
a sinusoidal sweep curve.

8. The power supply (1) of claim 6 or claim 7,
the relative phase shift among the first-stage power converters (11) being inversely proportional to a cardinality N of the first-stage power converters (11).

9. The power supply (1) of any one of the preceding claims, further comprising a second-stage power converter (12), connected downstream of the parallel-connected output ports (111) of the first-stage power converters (11) and configured to
regulate an output current (121) in accordance with a constant current setpoint value.

10. The power supply (1) of any one of the preceding claims,
the plurality of first-stage power converters (11) comprising
a plurality of switching power supplies.

11. The power supply (1) of any one of the preceding claims,
the second-stage power converter (12) comprising one of
a switching power supply, and
a linear regulator.

12. A lighting system (1, 2), comprising
a power supply (1) according to any one of the claims 1 - 11; and
a light source (2) connected downstream of the power supply (1).

13. The lighting system of claim 12,
the light source (2) comprising at least one light-emitting diode, LED.
